Europäisches Patentamt

European Patent Office

Office européen des brevets

(11) Veröffentlichungsnummer: **0 290 605**
A1

# (12) EUROPÄISCHE PATENTANMELDUNG

Veröffentlicht nach Art. 158 Abs. 3 EPÜ

(21) Anmeldenummer: 87900736.7

(22) Anmeldetag: 20.11.86

Daten der zugrundeliegenden internationalen Anmeldung:

(86) Internationale Anmeldenummer:
PCT/SU86/00119

(87) Internationale Veröffentlichungsnummer:
WO88/03913 (02.06.88 88/12)

(51) Int. Cl.³: **C 02 F 3/34**
**C 02 F 3/28**

(43) Veröffentlichungstag der Anmeldung:
17.11.88 Patentblatt 88/46

(84) Benannte Vertragsstaaten:
BE CH DE FR GB IT LI NL SE

(71) Anmelder: INSTITUT KOLLOIDNOI KHIMII I KHIMII VODY IMENI A.V.DUMANSKOGO AKADEMII NAUK UKRAINSKOI SSR
pr.Vernadskogo, 42
Kiev, 252680(SU)

(72) Erfinder: GVOZDYAK, Petr Iliich
ul. Miljutenko, 15a-20
Kiev, 252165(SU)

(72) Erfinder: UDOD, Vera Mikhailovna
ul. Vyshgorodskaya, 46v-174
Kiev, 252114(SU)

(72) Erfinder: BELYAEV, Vladimir Lvovich
ul. Galitskaya, 130-48
Ivano-Frankovsk, 284019(SU)

(72) Erfinder: MANULYAK, Iosif Iliich
ul. Shevchenko, 37-13
Ivano-Frankovsk, 284005(SU)

(72) Erfinder: SIDLYARCHUK, Orest Iosifovich
ul. Galitskaya, 126-132
Ivano-Frankovsk, 284019(SU)

(72) Erfinder: PODORVAN, Natalia Illarionovna
ul. Dobrokhotova, 3-121
Kiev, 252142(SU)

(74) Vertreter: von Füner, Alexander, Dr. et al,
Patentanwälte v. Füner, Ebbinghaus, Finck Mariahilfplatz 2 & 3
D-8000 München 90(DE)

(54) **VERFAHREN ZUR BIOLOGISCHEN ABWASSERREINIGUNG VON NICHTIONOGENEN OBERFLÄCHENAKTIVEN SUBSTANZEN.**

(57) Verfahren zur biologischen Abwasserreinigung von nichtionogenen oberflächenaktiven Stoffen besteht darin, dass die Abwässer einer Reinigung unter anaeroben Bedingungen mit Bakterien der Gattungen Bacillus, Pseudomonas und mit denitrifizierenden, sulfatreduzierenden, methanbildenden Bakterien, die aus vergorenem, bei einer Temperatur von 40-90°C benahdeltem Ausscheidungsprodukt isoliert sind un in der angegebenen Reihenfolge an einem wasserunlöslichen Träger fixiert sind, unterworfen werden.

## VERFAHREN ZUR BIOLOGISCHEN ABWASSERREINIGUNG VON NICHTIONOGENEN OBERFLÄCHENAKTIVEN STOFFEN

### Technisches Gebiet

Die Erfindung bezieht sich auf das Gebiet der Wasseraufbereitung und Industrieabwasserbehandlung, insbesondere auf biologische Abwasserreinigung von nichtionogenen oberflächenaktiven Stoffen (NOS).

### Vorangehender Stand der Technik

Bekannt ist ein Verfahren zur Abwasserreinigung von nichtionogenen oberflächenaktiven Stoffen mit Hilfe von Belebtschlamm in herkömmlichen biologischen Reinigungsanlagen (Lukinykh N.A. Ochistka stochnykh vod, soderzhaschikh SPAV, M., Stroiizdat, 1972, S. 63). Das Verfahren dient zur Reinigung von Abwässern, in denen der NOS-Gehalt unter 20 mg/l liegt. Wenn der NOS-Gehalt in dem zu reinigenden Wasser höhere Konzentrationen aufweist, ist das Verdünnen des Abwassers mit Flusswasser notwendig. Die Reinigung in Anlagen mit Belebtschlamm erfolgt bei der Umgebungstemperatur in Gegenwart von Luft und Belebtschlamm. Biologische Reinigungsanlagen solchen Typs erfordern bedeutende materielle Ausgaben und Anwendungen für Energie.

Bekannt ist ferner ein Verfahren zur Wasserreinigung von einzelnen individuellen NOS (hydroxyätnylierte Alkohole, hydroxyäthylierte Alkylphenole) mit Kulturen der Gattung Pseudomonas bei deren Ausgangsgehalt in Abwasser von höchstens 1 g/l (Shenfeld N. Poverkhnostnoaktivnye veschestva na osnove oxida etilena, M., Khimiya, 1982, S. 299). Dieses Verfahren ist aber nur für Laboratorien geeignet und kann grosstechnisch nicht verwendet werden, weil das reale Abwasser in der Regel ein NOS-Gemisch enthält,(Herstellung von organischen Stoffen, Textilindustrie) und die Anwendung von Reinkulturen der Mikroorganismen unter den Verhältnissen der Produktion zur Wasserreinigung unmöglich ist.

- 2 -

Bekannt ist ein Verfahren zur biologischen Abwasserreinigung von einem NOS-Morpholin-Gemisch unter anaeroben-aeroben Bedingungen (SU-PS, 1131901, IPK³ C02 F 3/34, Patentblatt Nr. 48, 1984). Das Wesen des Verfahrens besteht in der Abwasserbehandlung mit Mikroben in zwei Stadien. Im ersten Stadium wird das Wasser mit vergorenem Ausscheidungsprodukt, das eine Bakterienassoziation enthält, und im zweiten Stadium mit dem Stamm Ps.aer - ginosa 1/5 unter aeroben Bedingungen gereinigt. Die Durchführung dieses Verfahrens ist bei der Reinigung des Wassers, das NOS wie hydroxyäthylierte Alkohole und Säuren, Blockmischpolymere von Äthylen- und Propylenoxid bei deren Gesamtkonzentration von 6,5 g/l und 0,3 g/l Morpholin enthält, und bei einer Reinigungszeit von 24 Stunden möglich. Es wird ein Reinigungsgrad von 99-100% erreicht, was es ermöglicht, solche Wässer in biologische Kläranlagen zu leiten.

Obwohl dieses Verfahren einen hohen Reinigungsgrad gewährleistet, kann es nur zur Reinigung von Abwässern angewandt werden, die eine ganz bestimmte NOS-Zusammensetzung aufweisen, weil nur eine Art des Stammes Ps. aeruginosa 1/5 verwendet wird. Darüber hinaus erfolgt das zweite Stadium unter aeroben Bedindungen, und der Reinigungsprozess ist langwierig, wodurch seine Energieintensität erhöht wird.

Offenbarung der Erfindung

Der Erfindung liegt die Aufgabe zugrunde, ein solches Verfahren zur biologischen Abwasserreinigung durch entsprechende Auswahl von anaeroben Mikroorganismen zu entwickeln, das die Entfernung nichtionogener oberflächenaktiver Stoffe in höherer Konzentration aus den Abwässern unter gleichzeitiger Verringerung der Reinigungsdauer bewirkt.

Die Aufgabe wird dadurch gelöst, dass ein Verfahren zur biologischen Abwasserreinigung vonnichtionogenen oberflächenaktiven Stoffen unter Anwendung von vergorenem

- 3 -

Ausscheidungsprodukt, das eine Bakterienassoziation enthält, vorgeschlagen wird in dem erfindungsgemäss die Abwässer mit Bakterien der Gattungen Bacillus, Pseudomonas, und mit denitrifizierenden, sulfatreduzierenden, methanbildenden Bakterien, die aus vergorenem, bei einer Temperatur von 40-90°C behandeltem Ausscheidungsprodukt ausgeschieden und an wasserunglöslichem Träger in der angegebenen Reihenfolge fixiert sind, unter anaeroben Bedingungen gereinigt werden.

Das Verfahren ermöglicht es, biologische Technologie zur Reinigung hochkonzentrierter Industrieabwässer, die höchstens 30 g/l Gemisch aus biologisch schwer zerstörbaren NOS enthalten, unter Erreichung eines 99-100%-igen Reinigungsgrades innerhalb einer kurzen Zeitspanne zu entwickeln. Das Verfahren sieht die Reinigung der Abwässer von NOS, die zu allen Gruppen von Stoffen der angegebenen Klasse chemischer Verbindungen gehören , vor. Die einfache apparative Gestaltung, geringe Energieintensität des Prozesses, einwandfreie ökologiemässige Eigenschaften ermöglichen es, die erwähnte Biotechnologie in der Industrie breit zu verwenden.

Um den Reinigungsprozess der Abwässer von einem NOS-Gemisch zu intensivieren, führt man ihn zweckmässigerweise in einem kontinuierlichen Mehrstufenapparat bei einer Geschwindigkeit deren Verdünnung von 0,25-0,5 $h^{-1}$ durch.

Zur Herstellung einer hochaktiven Bakterienassoziation, die befähigt ist, hochkonzentrierte Abwässer effektiv zu reinigen, die mit ein einem Gemisch aus NOS verschiedenen chemischen Aufbaus verunreinigt sind, wird zweckmässigerweise das vergorene Ausscheidungsprodukt einer Behandlung bei einer Temperatur von 60-80°C unterworfen.

Das erfindungsgemässe Verfahren wird wie folgt durchgeführt.

Vergorenes Ausscheidungsgprodukt, das eine Bakterienassoziation enthält, wird einer Behandlung bei einer Temperatur von 40-90°C in Gegenwart von NOS ausgesetzt. Eine Entwicklung spezieller Bakterien des vergorenen Ausscheidungsproduktes und die Elimination unspezifischer Mikroflora erfolgen in höchstem Masse bei einer Temperatur von 60 bis 80 °C. Der positive Effekt der Wärmebehandlung des Ausscheidungsproduktes in Anwesenheit der zu untersuchenden NOS ist experimentell festgestellt, aber der Mechanismus ist endgültig nicht geklärt. Man kann nur vermuten, dass die bekannte Einwirkung der NOS auf strukturelle Elemente der Zelle (Zellenwand, zytoplasmatische Membran, Zellgenom) bedeutend vergrössert wird, wodurch eine Adaptation von Bakterien, die die Lebensfähigkeit unter den Verhältnissen solcher Bearbeitung erhalten haben, sowie das Erscheinen und Fixieren destruktiver Eigenschaften bei ihnen bewirkt werden.

Das behandelte vergorene Ausscheidungsprodukt, das eine Assoziation von anaeroben Bakterien enthält, wird zusammen mit dem zu reinigenden Abwasser einem Apparat mit wasserunlöslichem Träger zugeleitet. Das System befindet sich in einem Zustand ohne Durchfluss. Im Apparat erfolgt die Fixation der Bakterien auf einem Träger, wonach der Apparat beginnt, kontinuierlich zu arbeiten. Die Behandlungszeit von Abwässern beträgt 2-4 Stunden. Im Ergebnis der Reinigung von Abwässern werden durch Bakterien NOS abgebaut, deren Gehalt im gereinigten Wasser 10-20 mg/l (bei der Anfangskonzentration von höchstens 30 g/l) beträgt, oder sie fehlen bei der Anfangskonzentration von höchstens 5 g/l überhaupt. Das gereinigte Wasser kann je nach seiner Zusammensetzung nach der Reinigung Anlagen mit Belebtschlamm zugeführt werden.

Es wurde festgestellt, dass einzelne individuelle NOS (hydroxyäthylierte Alkohole, Säuren und Alkylphenole, Blockmischpolymere von Äthylen- und Propylenoxid, hochmolekulare Polyhydroxyverbindungen) die in Abwässern enthalten sind, von Bakterien schwer zu zerstören sind. Wenn aber das Wasser gereinigt wird, das ein Gemisch aus diesen Stoffen enthält, so werden abbauende Bakterien

unter äusserst ungünstigen Bedingungen funktionieren, und die Reinigung der Abwässer solcher Art wurde lediglcih im Falle möglich, wenn anaerobe Bakterien am wasserunlöslichen Träger in ganz bestimmter Reihenfolge fixiert wurden, und zwar Bakterien der Gattungen Bacillus, Pseudomonas und denitrifizierende, sulfatre-= duzierende, methanbildende Bakterien. Die Bakterien bauen NOS oder deren Zerfallprodukte in jedem Stadium des technologischen Zyklus ab. Eine Änderung dieser Folge bewirkt keine Reinigung von Abwässern solcher Zusammensetzung.

Apparative Gestaltung des Prozesses hängt von dem Volumen und der Zusammensetzung der zu reinigenden Abwässer, aber es ist wünschenswert, kontinuierliche Zuführung des zu reinigenden Wassers zu verwenden. Es sind empfehlenswert Biofilter oder Mehrstufenapparate vom Tunnel- oder Kolonnentyp zu benutzen.

Der anaerobe Prozess der Abwasserreinigung wird zweckmässigerweise bei einer Temperatur von 50 bis 60°C durchgeführt, obwohl auch die Reinigung bei niedrigeren Temperaturen (höchstens 25°C) möglich ist, aber die Behandlungszeit von Wasser wird wesentlich vergrössert.

Bei der Durchführung des Prozesses in einem kontinuierlichen Mehrstufenapparat ist es wünschenswert, die Verdünnungsgeschwindigkeit gleich 0,25-0,5 $h^{-1}$ aufrechtzuerhalten, die für völliges Inkontaktbringen von Bakterien mit den zu reinigenden Abwässern ausreichend ist.

Beste Ausführungsvariante der Erfindung

Biologische Reinigung von Abwässern, die von einem Gemisch nichtionogener oberflächenaktiver Stoffe (bei einem Gehalt von bis 30 g/l) verunreinigt sind, wird in einem kontinuierlichen Apparat bei einer Temperatur von 50 bis 60°C unter anaeroben Bedingungen durchgeführt. Im Apparat werden an einem wasserunlöslichen faserigen Träger - beispielsweise Glasfaserstoff - Bakterien in folgender Reihenfolge fixiert: der Gattungen Bacillus,

- 6 -

Pseudomonas denitrifizierende, sulfatreduzierende, methanbildende. Die genannten Bakterien werden aus vergorenem Ausscheidungsprodukt ausgeschieden, das bei einer Temperatur von 60 bis 80 °C in Anwesenheit von NOS behandelt ist. Der Reinigungsgrad des Wassers in bezug auf die Entfernung von NOS (Restgehalt an NOS 10-20 mg/l) beträgt 99-100%, wodurch es möglich wird, solche Wässer den Anlagen mit Belebtschlamm zuzuführen.

Das erfindungsgemässe Verfahren gibt die Möglichkeit, hochkonzentrierte Abwässer, die ein Gemisch aus biologisch schwer zerstörbaren NOS (bis zu 30 g/l) enthalten, zu reinigen, was durch die bekannten Verfahren zur biologischen Reinigung unerreichbar ist. Gegenwärtig werden solche Abwässer thermisch entgiftet, wobei es unwirtschaftlich und in ökologischer Hinsicht unvorteilhaft ist. Das Verfahren kennzeichnet sich auch durch eine einfache apparative Gestaltung und geringe Energieintensität.

Nachstehend werden konkrete Ausführungsbeispiele des erfindungsgemässen Verfahrens zur biologischen Abwasserreinigung von nichtionogenen oberflächenaktiven Stoffen angeführt.

Beispiel 1

Biologische Reinigung eines Abwassers, das 20 g/l Gemisch aus NOS hydroxyäthylierte Alkohole, Säuren und Alkylphenole, Blockmischpolymere von Äthylen- und Propylenoxid, Polyhydroxyverbindungen) enthält, wird unter anaeroben Bedingungen in einem kontinuierlichen Mehrstufenapparat verwirklicht. Der Apparat besteht aus 40 Sektionen, in denen ein wasserunlöslicher Träger - Glasfaserstoff - untergebracht ist. Am Glasfaserstoff sind Bakterien fixiert, isoliert aus einem vergorenen Auscheidungsprodukt, das bei einer Temperatur von 60°C behandelt ist. Die Bakterien sind am Träger in folgender Reihenfolge fixiert: die Gattung Bacillus, Pseudomonas (1.-3. Sektionen), Denitrifikatoren (4.-18. Sektionen), Sulfatreduzierer (19.-35.Sektionen),

- 7 -

Methanogene (36.-40.Sektionen). Die Reinigung wird bei einer Temperatur von 60°C und einer Verdünnungsgeschwindigkeit des Wassers von 0,25 h$^{-1}$ durchgeführt. Die Reinigungszeit beträgt 4 Stunden. Der Reinigungsgrad nach der Entfernung von NOS beträgt 99,87%, wodurch es möglich wird, solche Wässer (der NOS-Gehalt 10 mg/l) in Anlagen mit Belebtschlamm einzuleiten.

Beispiel 2

Biologische Reinigung eines Abwassers, das 20 g/l Gemisch aus NOS (hydroxyäthylierte Alkohole, Säuren und Alkylphenole, Blockmischpolymere von Äthylen- und Propylenoxid, Polyhydroxyverbindungen) enthält, wird unter anaeroben Bedingungen in einem kontinuierlichen Mehrstufenapparat verwirklicht. Der Apparat besteht aus 40 Sektionen, in denen ein wasserunlöslicher Träger - Glasfaserstoff - untergebracht ist. Am Glasfaserstoff sind Bakterien fixiert, isoliert aus einem unter einer Temperatur von 60°C behandelten vergorenen Ausscheidungsprodukt. Die Bakterien sind am Träger in folgender Reihenfolge fixiert: die Gattung Bacillus und Pseudomonas (1.-3.Sektionen), Denitrifikatoren (4.-18. Sektionen), Sulfatreduzierer (19.-35.Sektionen), Methanogene (36.-40.Sektionen). Die Reinigung wird bei einer Temperatur von 60°C durchgeführt. Die Reinigungszeit beträgt 2 Stunden. Der reinigungsgrad hinsichtlich der Entfernung von NOS beträgt 99,94 %, wodurch es möglich wird, solche Wässer (der NOS-Gehalt 20 mg/l) in Anlagen mit Belebtschlamm einzuleiten.

Beispiel 3

Biologische Reinigung eines Abwassers, das 30 g/l Gemisch aus NOS (hydroxyäthylierte Alkohole, Säuren und Alkylphenole, Blockmischpolymere von Äthylen- und Propylenoxid, Polyhydroxyverbindungen) enthält, wird unter anaeroben Bedingungen in einem kontinuierlichen Mehrstufenapparat verwikrlicht. Der Apparat besteht aus 40 Sektionen, in denen ein wasserunlöslicher Träger - Glasfaserstoff - untergebracht ist. Am Glasfaserstoff sind Bakterien fixiert, isoliert aus einem bei einer Temperatur von 80°C behandelten vergorenen Ausscheidungsprodukt. Die Bakterien sind am Träger in folgender Reihenfolge fixiert: die Gattung Bacillus und Pseudomonas (1.-3.Sektionen), Denitrifikatoren (4.-18.Sektionen), Sulfatreduzierer (19.-35. Sektionen), Methanogene (36.-40.Sektrionen). Die Reinigung wird bei einer Temperatur von 50°C und Verdünnungsgeschwindigkeit des Wassers von 0,5 h$^{-1}$ durchgeführt. Die Reinigungszeit beträgt 4 Stunden. Der Reinigungsgrad nach der Entfernung von NOS beträgt 99,97%, wodurch es möglich wird, solche Wässer (der NOS-Gehalt 10 mg/1) in Belebtschlammanlagen einzuleiten.

Beispiel 4

Biologische Reinigung eines Abwassers, das 30 g/l Gemisch aus NOS (hydroxyäthylierte Säuren und Alkylphenole, Blockmischpolymere von Äthylen- und Propylenoxid, Polyhydroxyverbindungen) enthält, wird unter anaeroben Bedingungen in einem kontinuierlichen Mehrstufenapparat verwirklicht. Der Apparat besteht aus 40 Sektionen, in denen ein wasserunlöslicher Träger - Glasfaserstoff - untergebracht ist. Am Glasfaserstoff werden Bakterien fixiert, isoliert aus einem bei einer Temperatur von 80°C behandelten vergorenen Ausscheidungsprodukt. Die Bakterien sind am Träger in folgender Reihenfolge fixiert: die Gattung Bacillus, Pseudomonas (1.-3. Sektionen), Denitrifikatoren (4.-18.Sektionen), Sulfatreduzierer (19.-35.Sektionen), Methanogene (36.-40.Sektionen). Die Reinigung wird bei einer Temperatur von 50°C und Verdünnungsgeschwindigkeit des Wassers von 0,25 h$^{-1}$ durchgeführt. Die Reinigungszeit beträgt 4 Stunden. Der Reinigungsgrad nach der Entfernung von NOS beträgt 99,94%, wodurch es möglich wird, solche Wässer (der NOS-Gehalt 20 mg/1) in Belebtschlammanlagen einzuleiten.

Beispiel 5

Biologische Reinigung eines Abwassers, das 5 g/l Gemisch aus NOS (hydrooxyäthylierte Alkohole, Säuren und Alkylphenole, Blockmischpolymere von Äthylen- und Propylenoxid, Polyhydroxyverbindungen) enthält, wird unter anaeroben Bedingungen in einem kontinuierlichen Mehrstufenapparat verwirklicht. Der Apparat besteht aus 20 Sektionen, in denen ein wasserunlöslicher Träger - Glasfaserstoff - untergebracht ist. Am Glasfaserstoff werden Bakterien fixiert, isoliert aus einem vergorenen und bei einer Temperatur von 70°C behandelten Ausscheidungsprodukt. Die Bakterien sind am Träger in folgender Reihenfolge fixiert: die Gattung Bacillus, Pseudomonas (1.-3. Sektionen), Denitrifikatoren (4.-14.Sektionen), Sulfatreduktoren (15.-17.Sektionen), Methanogene (18.-20.Sektionen). Die Reinigung wird bei einer Temperatur von 60°C und einer Verdünnungsgeschwindigkeit des Wassers von 0,25 $h^{-1}$ durchgeführt. Die Reinigungszeit beträgt 4 Stunden. Der Reinigungsgrad nach der Entfernung von NOS beträgt 100%, wodurch es möglich wird, solche Wässer (der NOS-Gehalt -Spuren) in Belebtschlammenlagen einzuleiten.

Beispiel 6

Biologische Reinigung eines Abwassers, das 5 g/l Gemisch aus NOS (hydroxyäthylierte Alkohole, Säuren und Alkylphenole, Blockmischpolymere von Äthylen- und Propylenoxid, Polyhydroxyverbindungen) enthält, wird unter anaeroben Bedingungen in einer kontinuierlichen Mehrstufenapparat verwirklicht. Der Apparat besteht aus 20 Sektionen, in denen ein wasserunlöslicher Träger - - Glasfaserstoff-untergebracht ist. Am Glasfaserstoff werden Bakterien fixiert, isoliert aus einem vergorenen und bei einer Temperatur von 60°C behandelten Ausscheidungsprodukt. Die Bakterien sind am Träger in folgender Reihenfolge fixiert: Bacillus, Pseudomonas (1-3. Sektionen), Denitrifikatoren (4.-14. Sektionen),Sulfatreduzierer (15.-17. Sektionen), Methanogene (18.-20. Sektionen). Die Reinigung wird bei einer Temperatur von 60°C und Verdünnungsgeschwindigkeit des Wassers von 0,5 $h^{-1}$ durchgeführt. Die Reinigungszeit beträgt 2 Stunden. Der Reinigungsgrad nach der Entfernung von NOS beträgt 100%, wodurch es möglich wird, solche Wässer (der NOS-Gehalt - Spuren) in Belebtschlammanlagen einzuleiten.

Beispiel 7

Biologische Reinigung eines Abwassers, das 5 g/l Gemisch aus NOS (hydroxyäthylierte Alkohole, Säuren und Alkylphenole, Blockmischpolymere von Äthylen- und Propylenoxid, Polyhydroxyverbindungen) enthält, wird unter anaeroben Bedingungen in einem kontinuierlichen Mehrstufenapparat durchgeführt. Der Apparat besteht aus 20 Sektionen, in denen ein wasserunlöslicher Träger - Glasfaserstoff - untergebracht ist. Am Glasfaserstoff werden Bakterien fixiert, isoliert aus einem vergorenen, bei einer Temperatur von 40°C behandelten Ausscheidungsprodukt. Die Bakterien sind am Träger in folgender Reihenfolge fixiert: die Gattung Bacillus, Pseudomonas (1.-3. Sektionen), Denitrifikatoren (4.-14.Sektionen), Sulfatreduzierer (15.-17. Sektionen), Methanogene (18.-20.-Sektionen). Die Reinigung wird bei einer Temperatur von 50°C und Verdünnungsgeschwindigkeit des Wassers von 0,25 $h^{-1}$ durchgeführt. Die Reinigungszeit beträgt 4 Stunden. Der Reinigungsgrad nach der Entfernung von NOS beträgt 99,99%, wodurch es möglich wird, solche Wässer (der NOS-Gehalt 5 mg/l) in Belebtschlammanlagen einzuleiten.

Beispiel 8

Biologische Reinigung eines Abwassers, das 5 g/l Gemisch aus NOS (hydroxyäthylierte Alkohole, Säuren und Alkylphenole, Blockmischpolymere von Äthylen- und Propylenoxid, Polyhydroxyverbindungen) enthält, wird unter anaeroben Bedingungen in einem kontinuierlichen Mehrstufenapparat verwirklicht. Der Apparat besteht aus 20 Sektionen, in denen ein wasserunlöslicher Träger - Glasfaserstoff - untergebracht ist. Am Glasfaserstoff werden Bakterien fixiert, isoliert aus einem vergorenen, bei einer Temperatur von 90°C behandelten Ausscheidungsprodukt. Die Bakterien sind am Träger in folgender Reihenfolge fixiert: die Gattung Bacillus, Pseudomonas (1.-3. Sektionen), Denitrifikatoren (15.-17.Sektrionen), Sulfatreduzierer (15.-17.Sektionen), Methanogene (18.-20. Sektionen). Die Reinigung wird bei einer Temperatur von 50°C und einer Verdünnungsgeschwindigkeit des Wassers von 0,25 h$^{-1}$ durchgeführt. Die Reinigungszeit beträgt 4 Stunden. Der Reinigungsgrad nach der Entfernung von NOS beträgt 97%, wodurch es möglich wird, solche Wässer (der NOS-Gehalt 150 mg/1) in Belebtschlammanlagen einzuleiten.

Beispiel 9

Biologische Reinigung eines Abwassers, das 30 g/1 Gemisch aus NOS (hydroxyäthylierte Alkohole, Säuren und Alkylphenole, Blockmischpolymere von Äthylen und Propylenoxid, Polyhydroxyverbindungen) enthält, wird unter anaeroben Bedingungen in einem kontinuierlichen Mehrstufenapparat verwirklicht. Der Apparat besteht aus 40 Sektionen, in denen ein wasserunlöslicher Träger - Glasfaserstoff - untergebracht ist. Am Glasfaserstoff werden Bakterien fixiert, isoliert aus einem vergorenen, bei einer Temperatur von 60°C behandelten Ausscheidungsprodukt. Die Bakterien sind in folgender Reihenfolge am Träger fixiert: die Gattung Bacillus, Pseudomonas (1.-3.Sektionen), Denitrifikatoren (4.-18.Sektionen), Sulfatreduzierer (19.-35. Sektionen), Methanogene (36.-40.Sektionen). Die Reinigung wird bei einer Temperatur von 25°C durchgeführt. Die Reinigungszeit beträgt 4 Stunden. Der Reinigungsgrad nach der Entfernung von NOS beträgt 90%, wodurch es möglich wird, solche Wässer (der NOS-Gehalt 3 g/1) in Belebtschlammanlagen einzuleiten.

- 12 -

Beispiel 10

Biologische Reinigung eines Abwassers, das 5 g/l Gemisch aus NOS (hydroxyäthylierte Alkohole und Säuren) enthält, wird unter anaeroben Bedingungen in einem kontinuierlichen Mehrstofenapparat verwirklicht. Der Apparat besteht aus 10 Sektionen, in denen ein wasserunlöslicher Träger - Glasfaserstoff - untergebracht ist. Am Glasfaserstoff werden Bakterien fixiert, isoliert aus einem vergorenen, bei einer Temperatur von 60°C behandelten Ausscheidungsprodukt. Die Bakterien sind am Träger in folgender Reihenfolge fixiert: die Gattung Bacillus, Pseudomonas (1.-3.Sektionen), Denitrifikatoren (4.-6.Sektionen), Sulfatreduzierer (7.-8.Sektionen), Methanogene (9.-10.Sektionen). Die Reinigung wird bei einer Temperatur von 50°C und einer Verdünnungsgeschwindigkeit des Wassers 0,25 h$^{-1}$ verwirklicht. Die Reinigungszeit beträgt 4 Stunden. Der Reinigungsgrad nach der Entfernung von NOS beträgt 100%, wodurch es möglicht wird, solche Wässer (der NOS-Gehalt - Spuren) in Belebtschlammanlagen einzuleiten.

Industrielle Anwendbarkeit

Das erfindungsgemässe Verfahren kann am erfolgreichsten zur Reinigung von Industrieabwässern feiner organischer Synthese, die mit biologisch schwer zerstörbaren Verbindungen, solchen wie hydroxyäthylierte Alkohole, Säuren, Alkylphenole, Blockmischpolymere von Äthylen- und Propylenoxid, Polyhydroxyverbindungen verunreinigt sind, angewandt werden.

PATENTANSPRÜCHE

1. Verfahren zur biologischen Abwasserreinigung von nichtionogenen oberflächenaktiven Stoffen unter Anwendung von vergorenem Ausscheidungsprodukt, das eine Bakterienassoziation enthält, dadurch g e k e n n - z e i c h n e t, dass Abwässer einer Reinigung unter anaeroben Bedingungen mit Bakterien der Gattungen Bacillus, Speudomonas und mit denitrifizierenden, sulfatreduzierenden, methanbildenden Bakterien, die aus einem vergorenen, bei einer Temperatur von 40 bis 90°C behandelten Ausscheidungsprodukt isoliert und an einem wasserunlöslichen Träger in der angegebenen Reihenfolge fixiert sind, unterworfen werden.

2. Verfahren nach Anspruch 1, dadurch g e k e n n - z e i c h n e t, dass die Reinigung von Abwässern bei einer Verdünnungsgeschwindigkeit von 0,25-0,5 $h^{-1}$ in einem kontinuierlichen Mehrstufenapparat durchgeführt wird.

3. Verfahren nach Anspruch 1, 2, dadurch g e k e n n - z e i c h n e t, dass die Reinigung von Abwässern mit den genannten Bakterien durchgeführt wird, isoliert aus einem vergorenen und bei einer Temperatur von 60-80°C behandelten Ausscheidungsprodukt.

# INTERNATIONAL SEARCH REPORT

International Application No PCT/SU 86/00119

**I. CLASSIFICATION OF SUBJECT MATTER** (If several classification symbols apply, indicate all)

According to International Patent Classification (IPC) or to both National Classification and IPC

IPC$^4$    C02F 3/34,3/28

**II. FIELDS SEARCHED**

Minimum Documentation Searched

| Classification System | Classification Symbols |
|---|---|
| IPC$^4$ | C02F 3/34,3/28 |

Documentation Searched other than Minimum Documentation
to the Extent that such Documents are Included in the Fields Searched

**III. DOCUMENTS CONSIDERED TO BE RELEVANT**

| Category | Citation of Document, with indication, where appropriate, of the relevant passages | Relevant to Claim No. |
|---|---|---|
| A | SU, A1, 1177279 (Institut kolloidnoi khimii i khimii vody im A.V.Dumansko-go) 07 September 1985 (07.09.85) see the claims | 1-3 |
| A | SU, A1, 1232649 (R.P. Haumova et al.) 23 May 1986 (23.05.86) see the claims | 1-3 |
| A | SU, A1, 1131901 (Institut kolloidnoi khimii i khimii vody im A. V. Dumanskogo) 30 December 1984 (30.12.84) see the claims | 1 |
| A | SU, A1, 893896 (Institut kolloidnoi khimii i khimii vody AN Ukrainskoi SSR) 30 December 1981(30.12.81) see the claims | 1 |
| A | GB, A 1375394 (Combinatul Chimic Fagaras) 27 November 1974 (27.11.74) see the claims | 1 |

* Special categories of cited documents:

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

**IV. CERTIFICATION**

| Date of the Actual Completion of the International Search | Date of Mailing of this International Search Report |
|---|---|
| 24 July 1987 (24.07.87) | 17 August 1987 (17.08.87) |

| International Searching Authority | Signature of Authorized Officer |
|---|---|
| ISA/SU | |

Form PCT/ISA/210 (second sheet) (January 1985)